# EUROPÄISCHE PATENTSCHRIFT

(11) **EP 1 177 223 B1**
(45) Veröffentlichungstag und Bekanntmachung des Hinweises auf die Patenterteilung: **31.03.2004**
(21) Anmeldenummer: 00922660.6
(22) Anmeldetag: 13.04.2000
(51) Int. Cl.: C08F 8/44

(54) **WÄSSRIGE KUNSTSTOFF-DISPERSIONEN MIT ERHÖHTER STABILITÄT**
AQUEOUS PLASTIC DISPERSIONS PRESENTING INCREASED STABILITY
DISPERSIONS DE MATIERE PLASTIQUE AQUEUSES A STABILITE ELEVEE

(30) Priorität: 16.04.1999 DE 19917285
(43) Veröffentlichungstag der Anmeldung: 06.02.2002
(73) Patentinhaber: Celanese Emulsions GmbH, 61476 Kronberg/Ts. (DE)
(72) Erfinder: PAPENFUHS, Bernd, D-63179 Obertshausen (DE)
(74) Vertreter: Ackermann, Joachim, Dr., Patentanwalt Dr. Ackermann
(86) Internationale Anmeldenummer: PCT/EP2000/003628
(87) Internationale Veröffentlichungsnummer: WO 2000/063258

(56) Entgegenhaltungen:
- EP-A- 0 729 747
- GB-A- 497 726
- US-A- 2 892 825
- US-A- 5 625 098
- DATABASE WPI Section Ch, Week 8818 Derwent Publications Ltd., London, GB; Class A14, AN 1988-123690 XP002144133 & JP 63 068603 A (SHOWA DENKO KK), 28. März 1988 (1988-03-28)

## Beschreibung

Die vorliegende Erfindung betrifft wässrige Kunststoff-Dispersionen die mittels anionischer Gruppen elektrostatisch stabilisiert sind und die beispielsweise durch Emulsionspolymerisation erhalten werden können, Verfahren zu deren Herstellung sowie deren Verwendung.

Es ist bekannt, dass Latices aus thermodynamischer Sicht instabile Systeme darstellen, die durch geeignete Maßnahmen möglichst gut stabilisiert werden müssen. Eine Möglichkeit zur Stabilisierung gegenüber einer durch Scherbelastung, Elektrolytzusatz oder kritisch hohen Feststoffgehalt hervorgerufenen Koagulation oder Stippenbildung kann durch Copolymerisation von Monomeren mit aciden Gruppen erreicht werden. Im allgemeinen werden für die Neutralisation dieser sauren Gruppen anorganische Basen, wie AlkalimetallHydroxide oder Ammoniak verwendet. Aus der DE-A-19 56 509 sind auch Dispersionen bekannt, die mit bestimmten Alkanolaminen (nämlich monohydroxyalkyl-substituierten Ammoniak-Derivaten) als Gegenionen neutralisiert wurden.

Überraschenderweise wurde jetzt gefunden, dass eine Neutralisation von an der Latexpartikel-Oberfläche befindlichen sauren Gruppen mit aminierten Zuckeralkoholen zu gegenüber dem Stand der Technik deutlich stabileren Kunststoff-Dispersionen führt.

Gegenstand der vorliegenden Anmeldung sind somit wässrige Kunststoff-Dispersionen, enthaltend Latex-Teilchen, die anionische Gruppen aufweisen, die dadurch gekennzeichnet sind, dass zumindest ein Teil der anionischen Gruppen aminierte Zuckeralkohole in protonierter Form als Gegenion aufweisen.

Bevorzugt werden als aminierte Zuckeralkohole N-Alkylglucamine oder D-Glucamin, besonders bevorzugt N-Alkylglucamine in denen die Alkylgruppe 1 bis 4 Kohlenstoffatome aufweist, und insbesondere N-Methylglucamin, eingesetzt. Ferner können auch Diglucamine eingesetzt werden.

Die Neutralisation einer sauren Kunststoff-Dispersion, die eine vollständige Ladungsdissoziation und damit Stabilisierung bewirken soll, ist wegen der dabei auftretenden hohen lokalen Ionenkonzentration normalerweise ein kritischer Prozessschritt, währenddem es zur Bildung von mehr oder weniger Stippen oder im schlimmsten Fall sogar zu einer vollständigen Koagulation kommt.

Verwendet man als Base dagegen aminierte Zuckeralkohole, vorzugsweise N-Alkylglucamin, insbesondere N-Methylglucamin (NMG) oder wenigstens eine Teilmenge dieses aminierten Zuckeralkohols zur teilweisen oder vollständigen Neutralisation der Kunststoff-Dispersionen, so lässt sich gegenüber den mit den bisher üblichen Neutralisationsagentien erhaltenen Produkten ein deutlicher Stabilitätsvorteil erkennen: Die Bestimmung der Koagulatanteile eines mit verschiedenen Basen neutralisierten Latex durch Filtration, liefert nämlich unabhängig von dem zur Polymerisation verwendeten Monomer-System für mit aminierten Zuckeralkoholen behandelte Produkte immer die geringsten Siebrückstands-Werte.

Vorteilhaft ist auch die nachwachsende Rohstoffbasis dieser Verbindungen, die durch reduktive Aminierung direkt aus den entsprechenden Kohlenhydraten erhältlich sind.

Die betreffenden, ausgehend von Glucose erhältlichen aminierten Zuckeralkohole, die beispielsweise in der WO 93/03004 beschrieben werden, die normalerweise als Rohstoffe für Tenside großtechnisch eingesetzt werden (DE-A-35 38 451), sind leicht wasserlöslich und in dieser Form auch kommerziell erhältlich.

Die Vorteile der erfindungsgemäßen Kunststoff-Dispersionen liegen in der gegenüber den herkömmlichen Produkten deutlich erhöhten Stabilität, die sich bei der Konfektionierung zu Endprodukten, wie Farben, Putzen, Lacken oder Klebstoffen positiv auswirkt.

So ist die bei der Nachgabe von Pigmenten, Elektrolyten, Verdickem etc. und parallel auftretenden Scherbelastungen häufig beobachtete Bildung von Koagulat oder Stippen stark eingeschränkt bzw. tritt überhaupt nicht auf. Dieser Vorteil hat zudem keinerlei negative Einflüsse auf die anwendungstechnischen Eigenschaften der Produkte.

Die Herstellung der erfindungsgemäßen Dispersionen geschieht vorzugsweise durch einfaches Einrühren einer wässrigen Lösung (5 bis 70%ig) des betreffenden aminierten Zuckeralkohols in den sauren bzw. bereits mit anderen Basen teilneutralisierten Latex. Die Temperatur liegt dabei im allgemeinen zwischen 0°C und 100°C, vorzugsweise zwischen 20°C und 80°C. Natürlich ist auch das Einrühren des sauren bzw. bereits mit anderen Basen teilneutralisierten Latex in die wässrige Lösung des betreffenden aminierten Zuckeralkohols möglich.

Das der Kunststoff-Dispersion zugrundeliegende Monomer-System und Monomer-Verhältnis ist von untergeordneter Bedeutung, ebenso die Art des vorgeschalteten Verfahrens zur Herstellung des Latex (Reemulgierung von Dispersionspulver, Emulsionspolymerisation, Suspensionspolymerisation etc.).

Die erfindungsgemäßen wässrigen Kunststoffdispersionen finden vorzugsweise Anwendung in Farben, Putzen, Lacken und Klebstoffen.

Die vorliegende Erfindung wird im Folgenden anhand von Ausführungsbeispielen näher beschrieben, ohne dadurch jedoch eingeschränkt zu werden.

### Beispiele und Vergleichsbeispiele

### Bestimmung des Siebrückstandes

Als Maß für die unterschiedliche Stabilität der Latices in Abhängigkeit von den Gegenionen wird nach Neutralisation von Modell-Dispersionen mit den verschiedenen Basen der sogenannte Siebrückstand bestimmt. Und zwar direkt nach der pH-Einstellung, nach einer 14-tägigen Lagerung im Trockenschrank bei 50°C bzw. nach einer direkt an die Neutralisation sich anschließenden 2-minütigen starken Scherbelastung der Proben.
Der Siebrückstand entspricht dem Anteil von groben Stippen und Koagulat in Polymer-Dispersionen und wird folgendermaßen bestimmt:
100,0 g der zu untersuchenden homogenisierten Dispersionsprobe werden vorsichtig mit 500,0 g destilliertem Wasser verdünnt, ohne dass sich dabei Schaum bildet. Anschließend wird die Mischung durch ein vorher tariertes Sieb, bestehend aus einem in geeigneter Weise eingespannten Stück entfetteten Stahldrahtgewebes (Edelstahl-Feindrahtgewebe Nr. 375VA140K, Typ "Muiti", Art.-Nr. 00100540-15, Hersteller: Fa. Haver & Boecker, 47400 Oelde/Westfalen) mit einer Maschenweite von 0,04 mm, gegossen und der Rückstand vorsichtig mit dem zum Ausspülen des Probengefäßes (quantitative Überführung) verwendeten destillierten Wasser bis zur Schaumfreiheit "nachgewaschen". Das nasse Sieb wird nun auf eine saubere Petrischale gelegt und mindestens eine Stunde lang bei 105°C bis 135°C getrocknet. Schließlich wird das abgekühlte Sieb zurückgewogen und mit Hilfe der Einwaage der Siebrückstand in Gew.-% berechnet. Die in den Tabellen angegebenen Werte entsprechen dem Mittelwert einer so durchgeführten Doppelbestimmung.

### Ermittlung der Scherstabilität

Zur Ermittlung der Scherstabilität werden 150 ml der jeweiligen Dispersionsprobe in einem Cowles-Dissolver mit Dispergierscheibe (Durchmesser. 5 cm) und Metallbecher (Durchmesser: 8,5 cm, Volumen: ca. 800 ml) für 120 Sekunden bei 5000 Umdrehungen pro Minute geschert.
Bei einer Koagulation des Latex (extreme Erhöhung der Viskosität) wird die Scherung sofort abgebrochen und die bis dahin verstrichene Zeit angegeben. Wenn während der Scherbelastung keine Koagulation der Dispersion eintritt, wird die Dispersion in eine 500 ml Glasflasche mit Schraubverschluss überführt und nach Absetzen des Schaums wie oben beschrieben der Siebrückstand bestimmt.

Als Modell-Dispersionen wurden zwei Produkte der Clariant GmbH gewählt:

®Mowilith LDM 7250 ca. 50 % ist eine weichmacherfreie wässrige Dispersion auf Basis von Acryl- und Methacrylsäureestern, die als Kaschierklebstoff beispielsweise zur Glanzfolienkaschierung eingesetzt wird.

®Mowilith VDM 7830 ca. 50 % ist ebenfalls eine weichmacherfreie wässrige Dispersion, die auf Acrylsäureestem und Styrol als Hauptmonomeren basiert und zur Imprägnierung von Dekor- und Finishfolien oder Vertikalkanten in der Möbelindustrie verwendet wird.

Beide Latices enthalten Acrylsäure und Methacrylsäure als stabilisierende Comonomere, die nach der Polymerisation normalerweise mit Natronlauge (®Mowilith LDM 7250) bzw. wässrigem Ammoniak (®Mowilith VDM 7830) neutralisiert werden. Zusätzlich zu diesen beiden Basen werden in den Versuchen die in den Tabellen wiedergegebenen Verbindungen Monoethanolamin, Diethanolamin und das erfindungsgemäße N-Methylglucamin verwendet. Alle Neutralisations-Agenzien werden zur Einstellung eines pH-Werts von ca. 6,5 als 10 %ige wässrige Lösungen unter langsamem Rühren bei 30°C in die zu untersuchenden Dispersions-Proben getropft. Abschließend wird durch Zusatz von destilliertem Wasser der Feststoff-Gehalt auf einen einheitlichen Wert von ca. 48 % gestellt.

### Beispiel 1: ®Mowilith LDM 7250

### a) nach Herstellung

| Neutr.-Agens | NaOH | NH₃ | H₂N(CH₂CH₂OH) | HN(CH₂CH₂OH)₂ | HN(CH₃)R^{*)} |
|---|---|---|---|---|---|
| Feststoff-Gehalt | 48,2 % | 48,1 % | 47,8 % | 48,3 % | 48,0 % |
| pH-Wert | 6,5 | 6,7 | 6,4 | 6,7 | 6,3 |
| Siebrück-stand | 0,002 % | 0,002 % | 0,002 % | 0,001 % | < 0,001 % |

| | | | | | |
|---|---|---|---|---|---|
| ^{*)} R = 2,3,4,5,6-Pentahydroxyhexyl-Rest | | | | | |

### b) nach Lagerung

| Neutr.-Agens | NaOH | NH₃ | H₂N(CH₂CH₂OH) | HN(CH₂CH₂OH)₂ | HN(CH₃)R^{*)} |
|---|---|---|---|---|---|
| Siebrück-stand | 0,002 % | 0,005 % | 0,003 % | 0.004 % | < 0,001 % |

### c) nach Scherbelastung

| Neutr.-Agens | NaOH | NH₃ | H₂N(CH₂CH₂OH) | HN(CH₂CH₂OH)₂ | HN(CH₃)R^{*)} |
|---|---|---|---|---|---|
| Siebrück-stand | 0,004 % | 0,006 % | 0,004 % | 0,004 % | 0,001 % |

### Beispiel 2: ®Mowilith VDM 7830

### a) nach Herstellung

| Neutr.-Agens | NaOH | NH₃ | H₂N(CH₂CH₂OH) | HN(CH₂CH₂OH)₂ | HN(CH₃)R^{*)} |
|---|---|---|---|---|---|
| Feststoff-Gehalt | 48,3 % | 48,0 % | 47,8 % | 48.1 % | 48,1 % |
| pH-Wert | 6,3 | 6,6 | 6,5 | 6,6 | 6,4 |
| Siebrück-stand | 0,004 % | 0,004 % | 0,003 % | 0,003 % | 0,001 % |

| | | | | | |
|---|---|---|---|---|---|
| ^{*)} R = 2,3,4,5,6-Pentahydroxyhexyl-Rest | | | | | |

### b) nach Lagerung

| Neutr.-Agens | NaOH | NH₃ | H₂N(CH₂CH₂OH) | HN(CH₂CH₂OH)₂ | HN(CH₃)R^{*)} |
|---|---|---|---|---|---|
| Siebrück-stand | 0,005 % | 0.007 % | 0,004 % | 0,005 % | 0,001 % |

### c) nach Scherbelastung

| Neutr.-Agens | NaOH | NH₃ | H₂N(CH₂CH₂OH) | HN(CH₂CH₂OH)₂ | HN(CH₃)R^{*)} |
|---|---|---|---|---|---|
| Siebrück-stand | 0,007 % | 0,008 % | 0,005 % | 0,006 % | 0,001 % |

## Patentansprüche

1. Wässrige Kunststoff-Dispersionen, enthaltend Latex-Teilchen, die anionische Gruppen aufweisen, **dadurch gekennzeichnet, dass** zumindest ein Teil der anionischen Gruppen aminierte Zuckeralkohole in protonierter Form als Gegenion aufweisen.

2. Wässrige Kunststoff-Dispersionen gemäß Anspruch 1, **dadurch gekennzeichnet, dass** als aminierte Zuckeralkohole N-Alkylglucamine oder D-Glucamin eingesetzt werden.

3. Wässrige Kunststoff-Dispersionen gemäß Anspruch 2, **dadurch gekennzeichnet, dass** als aminierte Zuckeralkohole N-Methylglucamin eingesetzt wird.

4. Verfahren zur Herstellung von wässrigen Kunststoff-Dispersionen gemäß mindestens einem der Ansprüche 1 bis 3, **dadurch gekennzeichnet, dass** eine wässrige Lösung des aminierten Zuckeralkohols in den sauren bzw. bereits mit anderen Basen teilneutralisierten Latex eingerührt wird.

5. Verwendung von wässrigen Kunststoff-Dispersionen gemäß mindestens einem der Ansprüche 1 bis 3 in Farben, Putzen, Lacken und Klebstoffen.

## Claims

1. An aqueous polymer dispersion comprising latex particles which contain anionic groups, wherein at least some of the anionic groups have aminated sugar alcohols in protonated form as counterion.

2. An aqueous polymer dispersion as claimed in claim 1, wherein N-alkylglucamines or D-glucamine are used as aminated sugar alcohols.

3. An aqueous polymer dispersion as claimed in claim 2, wherein N-methylglucamine is used as aminated sugar alcohols.

4. A process for preparing aqueous polymer dispersions as claimed in at least one of claims 1 to 3, wherein an aqueous solution of the aminated sugar alcohol is stirred into the latex, which is acidic or already partly neutralized with other bases.

5. The use of aqueous polymer dispersions as claimed in at least one of claims 1 to 3 in inks, plasters, paints, and adhesives.

## Revendications

1. Dispersions aqueuses de matières plastiques renfermant des particules de latex qui présentent des groupes anioniques, **caractérisées en ce qu'**au moins une partie des groupes anioniques présente des sucres alcools aminés sous forme protonée en tant que contre-ion.

2. Dispersions aqueuses de matières plastiques selon la revendication 1, **caractérisées en ce qu'**on utilise en tant que sucres alcools aminés des N-alkylglucamines ou la D-glucamine.

3. Dispersions aqueuses de matières plastiques selon la revendication 2, **caractérisées en ce qu'**on utilise en tant que sucres alcools aminés la N-méthylglucamine.

4. Procédé pour la préparation de dispersions aqueuses de matières plastiques selon au moins l'une des revendications 1 à 3, **caractérisé en ce qu'**on délaie une solution aqueuse du sucre alcool aminé dans les latex acides ou déjà partiellement neutralisés par d'autres bases.

5. Utilisation de dispersions aqueuses de matières plastiques selon l'une des revendications 1 à 3 dans les peintures, les enduits, les vernis et les adhésifs.
